# EUROPÄISCHE PATENTSCHRIFT

(11) **EP 1 985 178 B1**
(45) Veröffentlichungstag und Bekanntmachung des Hinweises auf die Patenterteilung: **23.09.2009**
(21) Anmeldenummer: 08007678.9
(22) Anmeldetag: 21.04.2008
(51) Int. Cl.: A01M 7/00

(54) **Geschlossenes landwirtschaftliches Feldspritzensystem**
Closed agricultural field spraying system
Système de pulvérisation de champ agricole fermé

(30) Priorität: 25.04.2007 DE 102007019480
(43) Veröffentlichungstag der Anmeldung: 29.10.2008
(73) Patentinhaber: Amazonen-Werke H. Dreyer GmbH & Co. KG, 49205 Hasbergen (DE)
(72) Erfinder: Austermann, Stefan, 48291 Telgte (DE); Ehlen, Volker, 49205 Hasbergen (DE)

(56) Entgegenhaltungen:
- EP-A- 0 472 860
- DE-A1- 3 938 673
- DE-A1-102004 035 377

## Beschreibung

Die Erfindung betrifft ein geschlossenes landwirtschaftliches Feldspritzensystem gemäß des Oberbegriffes des Patentanspruches 1.

Ein derartiges Feldspritzensystem ist beispielsweise in der EP 04 72 860 A1 sowie in der DE-A-10 2004035377 beschrieben. Bei diesem Feldspritzensystem ist in den von einer Pumpe zu dem Wasserstrahlpumpen führenden Pumpleitungen ein von einem Schwimmer betätigtes Umschaltventil angeordnet. Durch dieses Umschaltventil wird das Umpumpen der Flüssigkeit aus dem Flüssigkeitstank in den Zusatztank und das Zurücksaugen der Flüssigkeit aus dem Zusatztank in den Flüssigkeitstank gesteuert. Hierdurch erfolgt ein Austausch der Spritzflüssigkeit zwischen dem Flüssigkeitstank und dem Zusatzbehälter entsprechend der Einstellung des umschaltventils. Weiterhin ist es möglich, durch das Umpumpen der Flüssigkeit in einen Kreislauf die Spritzbrühe anzumischen. Die gesamte Umsteuerung des Umpumpens der Flüssigkeit ist ausschließlich abhängig von dem durch den Schwimmer betätigten Umschaltventil.

Der Erfindung liegt die Aufgabe zugrund, das bekannte Feldspritzensystem hinsichtlich des Umpumpens zwischen Flüssigkeitstank und Zusatztank wesentlich flexibler zu gestalten und einen an die Bedürfnisse angepassten Austausch der Flüssigkeiten vom Zusatztank zum Flüssigkeitstank und umgedreht zu ermöglichen.

Diese Aufgabe wird erfindungsgemäß dadurch gelöst, dass die Mittel zum Ein- und Ausschalten der Fördereinrichtungen als elektrisch schaltbare Mittel ausgebildet sind, dass jeweils eine den Flüssigkeitsstand im Flüssigkeitstank und dem Zusatzbehälter erfassende elektrische und/oder elektronische Sensoreinheit vorgesehen ist, dass die Sensoreinheiten Signale an eine Rechnereinheit übermitteln, dass aus den Signalen die Füllstandsdaten berechenbar und anhand der berechneten Daten die elektrisch schaltbaren Mittel von der Rechnereinheit betätigbar sind. Infolge dieser Maßnahmen kann über die elektrisch schaltbaren Mittel die jeweilige Fördereinrichtung entsprechend den Erfordernissen ein- und ausgeschaltet werden. Hierdurch kann in entsprechend gewünschter Weise die Flüssigkeit von dem Tank in den Behälter und umgedreht umgelagert oder umgewälzt werden. Durch die den Füllstand ermittelnden Sensoren wird sichergestellt, dass nur soviel Flüssigkeit in den Flüssigkeitstank oder Zusatzbehälter geleitet wird, dass der Tank oder Behälter nicht überläuft. Weiterhin kann durch die den Füllstand ermittelnden Sensoreinheiten und der hieraus den Füllstandsdaten berechnenden Rechnereinheit das Umwälzen und Umlagern der Flüssigkeit auch in automatischer Weise erfolgen.

Um das Umlagern und Umwälzen der Flüssigkeit entsprechend den jeweiligen Bedürfnissen durchführen zu können, ist vorgesehen, dass in der Rechnereinheit zumindest ein manueller und ein automatischer Betriebsmodus zum Ansteuern der elektrischen Mittel für das Ein- und Ausschalten der Fördereinrichtungen hinterlegt ist.

Um in einfacher Weise möglichst bedienerfreundliche Betriebsweisen des geschlossenen landwirtschaftlichen Feldspritzensystems zu ermöglichen, ist vorgesehen, dass für den automatischen Betriebsmodus zumindest für die Betriebsarten: "Befüllung", "Transport" und "Spritzen" die Schaltzyklen für die den Fördereinrichtungen zugeordneten elektrischen Ventile hinterlegt sind.

Eine besonders einfache Ausgestaltung der Fördereinrichtung und das Umlagern und Umwälzen der Flüssigkeiten lässt sich dadurch erreichen, dass sich die eine Wasserstrahlpumpe in der vom Flüssigkeitstank zum Zusatzbehälter führenden Zulaufleitung und die andere Wasserstrahlpumpe in der vom Zusatzbehälter zum Flüssigkeitstank führenden Rücklaufleitung befindet, dass die elektrischen Mittel als elektrisch schaltbare Ventile ausgebildet sind.

Weitere Einzelheiten der Erfindung sind der Beispielsbeschreibung und den Zeichnungen zu entnehmen. Hierbei zeigen
- Fig. 1: das geschlossene Feldspritzensystem in schematischer Darstellung und
- Fig. 2: ein weiteres geschlossenes Feldspritzensystem in schematischer Darstellung.

Das geschlossene landwirtschaftliche Feldspritzensystem besteht aus dem an der Heckseite des Schleppers angeordnetem Flüssigkeitstank 1 und dem an der Frontseite des Schleppers angeordneten Zusatzbehälter 2. Der Flüssigkeitstank 1 ist Bestandteil der heckseitig angeordneten Feldspritze. Diese Feldspritzen weisen üblicherweise einen Rahmen auf, über den die Feldspritze an den heckseitigen Dreipunktkraftheber des Ackerschleppers angebaut ist. Weiterhin weisen Feldspritzen ein Verteilergestänge mit nebeneinander angeordneten Spritzdüsen 3 auf. Derartige Verteilergestänge sind höhenbeweglich am Rahmen der Feldspritze befestigt. Der Feldspritze ist eine Pumpe 4 zugeordnet, die über einen motorischen Antrieb angetrieben wird. Über die Pumpe 4 wird die sich im Flüssigkeitstank befindliche Flüssigkeit über die Leitung 5 angesaugt und über ein Leitungssystem 6 und der Dosierarmatur 7 über den Zuleitungen 8 den Spritzleitungen 9 in einstellbarer weise zugeleitet. Über die den Spritzleitungen 9 zugeordneten Spritzdüsen 3, die an dem Verteilergestänge angeordnet sind, wird die Flüssigkeit in vorgesehener weise verteilt.

### Zur vergrößerung des mitzuführenden

Spritzflüssigkeitsvolumens ist auf der Frontseite des Ackerschleppers der vorerwähnte Zusatzbehälter 2 angeordnet. Derartige Zusatzbehälter 2 sind über Kuppelrahmen an der Frontseite des Ackerschleppers angebaut. Zum Austausch der Spritzflüssigkeit zwischen dem heckseitig angeordneten Flüssigkeitstank 1 und dem frontseitigen Zusatzbehälter 2 sind die beiden Behälter 1 und 2 über die Zulaufleitung 10 und die Rücklaufleitung 11 miteinander verbunden.

In der Zulaufleitung 10 und der Rücklaufleitung 11 sind im Bereich des Flüssigkeitstanks 1 die beiden Wasserstrahlpumpen 12, 13 als Fördereinrichtung 14 zum Umlagern und unter Umwälzen der Flüssigkeit zwischen dem Flüssigkeitstank 1 und dem Zusatzbehälter 2 angeordnet. Die Wasserstrahlpumpen 12, 13 weisen jeweils eine Düse 15 auf. Diese Düse 15 ist jeweils in der Nähe des Einlaufgrundes der jeweiligen Wasserstrahlpumpe 12, 13 angeordnet. Die Düsen 15 sind über die Druckleitungen 16, 17 mit der von der Pumpe 4 gespeisten Druckleitung 6 verbunden. Hierzu sind im Bereich der Druckleitung 6 die beiden 3-Wegeventile 18, 19, die im Ausführungsbeispiel motorisch betätigbar sind, angeordnet. An diese beiden 3-wegeventile 18, 19 sind die Druckleitungen 16, 17, die den Wasserstrahlpumpen 12, 13 zugeordnet sind, angeschlossen. Über die Druckleitungen 16, 17, die zu den Düsen 15 führen, kann, wenn die 3-Wegeventile 18, 19 den Durchfluss von der Druckleitung 6 zu den zu den Düsen 15 führenden Druckleitungen 16, 17 freigeben, Flüssigkeit zu den Düsen 15 der Wasserstrahlpumpen 12, 13 gedrückt werden.

Die als elektrisch schaltbaren 3-Wegeventile 18, 19 ausgebildeten elektrischen Mittel sind über Datenleitungen 20 mit dem Jobrechner 21 des Bordrechnersystems 22, dem noch das Bedienterminal 23 zugeordnet ist, verbunden.

Sowohl dem Flüssigkeitstank 1 wie auch dem Zusatzbehälter 2 sind Sensoreinheiten 24, 25 zur Erfassung des jeweiligen Flüssigkeitsstandes in dem Flüssigkeitstank 1 und dem Zusatzbehälter 2 zugeordnet. Im Ausführungsbeispiel sind diese Sensoreinheiten 24, 25 jeweils als von einem Schwimmer 26 betätigte Potentiometer 27 ausgebildet, die über Datenleitungen 28 dem Jobrechner 21 der Rechnereinheit 22 Signale übermitteln. Aus diesen Signalen berechnet der Jobrechner 21 die Füllstandsdaten.

Die. Sensoreinheiten 24 und 25 übermitteln ständig Signale an den Jobrechner 21, so dass der Jobrechner 21 ständig den Füllstand im Flüssigkeitstank 1 sowie im Zusatzbehälter 2 berechnet. In der Rechnereinheit 22 ist jeweils der maximale sowie der minimale Füllstand, der im Flüssigkeitstank 1 sowie im Zusatzbehälter 2 jeweils zulässig ist, hinterlegt, damit in jedem Falle sicher gestellt ist, dass die sich im Flüssigkeitstank und im Zusatzbehälter befindliche Flüssigkeit nicht über die Einfüllöffnung des Flüssigkeitstanks bzw. des Zusatzbehälters hinaus laufen kann.

In der Rechnereinheit 22 ist zumindest ein manueller und ein automatischer Betriebsmodus zum ansteuern der als motorisch schaltbare 3-Wege-Hähne 18, 19 ausgebildeten elektrischen Mittel für das Ein- und Ausschalten der Fördereinrichtung 14hinterlegt. Hierbei sind für den automatischen Betriebsmodus für die Betriebsarten: Befüllung, Transport und Spritzen die Schaltzyklen für die den Fördereinrichtungen 12, 13, 14 zugeordneten Ventilen 18, 19 hinterlegt.

Die Funktionsweise des geschlossenen landwirtschaftlichen Feldspritzensystems ist folgende:

Zum Einsatz muss das Feldspritzensystem zunächst mit Flüssigkeit, d.h. mit Wasser, welches Trägerflüssigkeit ist, und Wirkstoffmittel befüllt werden. Hierzu wird über die Einfüllöffnungen 29 bzw. 30 des Flüssigkeitstanks 1 oder des Zusatzbehälters 2 die anzumischende Flüssigkeit bzw. die bereits angemischte Flüssigkeit in den Tank 1 bzw. Behälter 2 eingeleitet. Um die Flüssigkeit beim Befüllen bzw. zum Umwälzen oder Vermischen zwischen dem Flüssigkeitstank 1 und dem Zusatzbehälter 2 umzulagern, bzw. umzuwälzen, werden über die Zulaufleitung 10 und Rücklaufleitung 11 mittels der als Wasserstrahlpumpen 12, 13 ausgebildeten Fördereinrichtungen 14 die Flüssigkeit umgewälzt bzw. umgelagert. Hierzu sind die 3-Wegehähne 18, 19 derart von dem Jobrechner 21 der Rechnereinheit 22 geschaltet, dass unter Druck stehende Flüssigkeit aus dem Leitungssystem 6 über die Druckleitung 16, 17 in die Düsen 15 der Wasserstrahlpumpen 12 und 13 eingeleitet, so dass über die Zulaufleitung 10 Flüssigkeit aus dem Flüssigkeitstank 1 in den Zusatzbehälter 2 geleitet wird, während über die Rücklaufleitung 11 Flüssigkeit aus dem Zusatzbehälter 2 in den Flüssigkeitstank 1 zurück geführt wird. Hierbei sind in der Rechnereinheit 22, insbesondere im Jobrechner 21 die Schaltzyklen für die Betriebsarten: Befüllung, Transport und Spritzen hinterlegt, so dass in Abhängigkeit der von den Sensoreinheiten 24 und 25 übermittelten Füllstandsdaten ein automatisches Umlagern und Umwälzen der Flüssigkeit entsprechend der in der Speichereinheit des Jobrechners 21 hinterlegten Schaltzyklen erfolgt.

Während des Transportes, d.h. der Fahrt von der Befüllstation zu dem auszubringenden Acker wird die Flüssigkeit zwischen dem Flüssigkeitstank 1 und dem Zusatzbehälter 2 umgewälzt, um ein vermischen von Trägerflüssigkeit und Wirkstoffmittel in gleichmäßiger weise sicherzustellen. Während der Betriebsart Spritzen wird in vorgegebener Weise die Flüssigkeit aus dem Zusatzbehälter 2 in den Flüssigkeitstank 1 überführt, so dass die gesamte sich im Zusatzbehälter 2 und Flüssigkeitstank 1 befindliche Flüssigkeit über die Spritzdüsen 3 ausgebracht wird.

Bei der manuellen Betriebsart kann der Fahrer des landwirtschaftlichen Spritzensystems nach seinen Verstellungen die Flüssigkeit zwischen den Flüssigkeitstank 1 und dem Zusatzbehälter 2 umwälzen und umlagern. Hierbei stellen die Sensoreinheiten 24, 25 in Verbindung mit den in der Rechnereinheit 21 hinterlegten Programm sicher, dass die 3-Wegehähne 18, 19 von der Recheneinheit 22 umgeschaltet werden, so dass die Wasserstrahlpumpen 12, 13 abgeschaltet werden, damit der festgelegte max. Füllstand im Flüssigkeitstank 1 und im Zusatzbehälter 2 nicht überschritten wird, damit keine Flüssigkeit aus dem Flüssigkeitstank 1 und den Zusatzbehälter 2 aus den Befüllöffnungen 29, 30 heraus gedrückt wird oder überläuft.

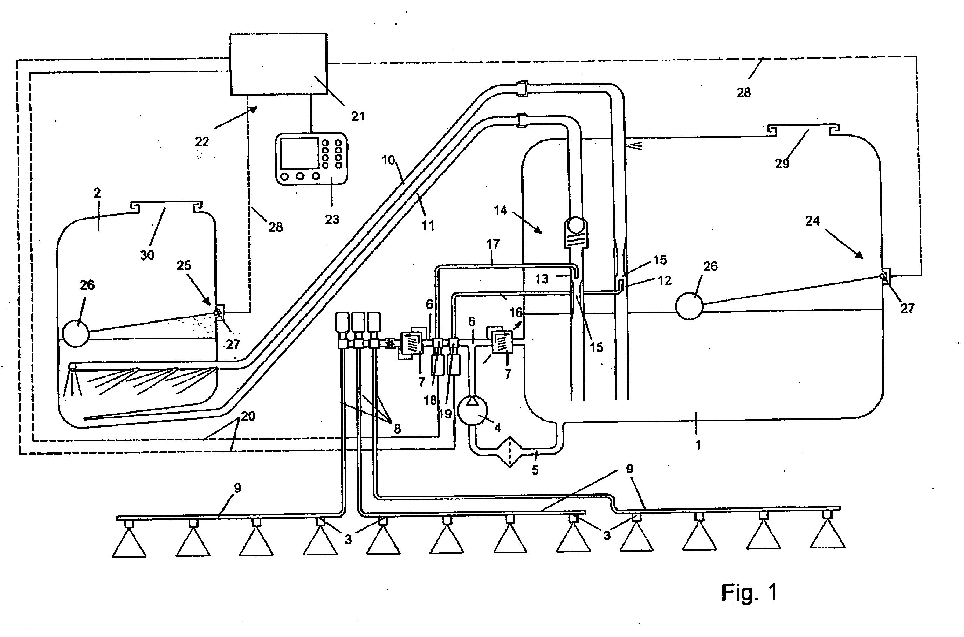

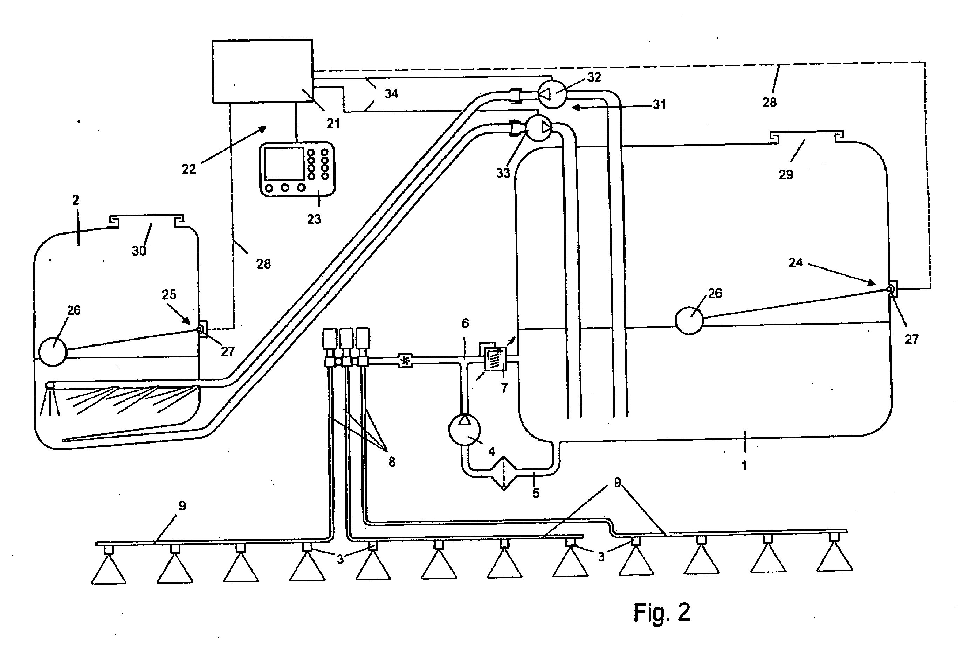

Das landwirtschaftliche Feldspritzensystem gemäß Fig. 2 unterscheidet sich von den landwirtschaftlichen Feldspritzensystem gemäß Fig. 1 durch eine anders ausgestaltete Fördereinrichtung 31 zum umwälzen und umlagern der Flüssigkeit zwischen dem Flüssigkeitstank 1 und dem Zusatzbehälter 2. In dem Feldspritzensystem nach Fig. 2 sind die Fördereinrichtungen 31 als motorisch angetriebene Pumpen 32, 33 ausgebildet, die von der Rechnereinheit 22 über Steuerleitung 34 über zugeordnete elektrisch schaltbare Mittel zu- und abzuschalten sind. Ansonsten entspricht die Funktionsweise und Betriebsweise des landwirtschaftlichen Feldspritzensystems gemäß Fig. 2 dem System gemäß Fig. 1

## Patentansprüche

1. Geschlossenes landwirtschaftliches Feldspritzensystem, bestehend aus einem Flüssigkeitstank und einem Zusatzbehälter, die über ein Leitungssystem miteinander in Verbindung stehen und eine Fördereinrichtung zum Umlagern und/oder Umwälzen der Flüssigkeit aufweisen, wobei der Austausch der Flüssigkeit zwischen dem Flüssigkeitstank und dem Zusatzbehälter mittels zugeordneter Fördereinrichtungen erfolgt, wobei Mittel zum Ein- und Ausschalten der Fördereinrichtungen vorgesehen sind, **dadurch gekennzeichnet, dass** die Mittel zum Ein- und Ausschalten der Fördereinrichtungen (12, 13, 14, 31, 32, 33) zum Umlagern und/oder Umwälzen der Flüssigkeit vom Tank in den Behälter und umgedreht als elektrisch schaltbare Mittel (18, 19, 32, 33) ausgebildet sind, dass jeweils eine den Flüssigkeitsstand im Flüssigkeitstank (1) und dem Zusatzbehälter (2) erfassende elektrische und/oder elektronische Sensoreinheit (24, 25, 27) vorgesehen ist, dass die Sensoreinheiten (24, 25, 27) Signale an eine Rechnereinheit (22) übermitteln, dass aus den Signalen die Füllstandsdaten berechenbar und anhand der berechneten Daten die elektrisch schaltbaren Mittel (18, 19, 32, 33) von der Rechnereinheit (21, 22, 23) betätigbar sind.

2. Feldspritzensystem nach Anspruch 1, **dadurch gekennzeichnet, dass** in der Rechnereinheit (21, 22, 23) zumindest ein manueller und ein automatischer Betriebsmodus zum Ansteuern der elektrischen Mittel (18, 19, 32, 33) für das Ein- und Ausschalten der Fördereinrichtungen (12, 13, 14, 31, 32, 33) hinterlegt ist.

3. Feldspitzensystem nach einem oder mehreren der vorstehenden Ansprüche, **dadurch gekennzeichnet, dass** für den automatischen Betriebsmodus zumindest für die Betriebsarten: "Befüllung", "Transport" und "Spritzen" die Schaltzyklen für die den Fördereinrichtungen (12, 13, 14, 31, 32, 33) zugeordneten elektrischen Ventile (18, 19) und/oder Mittel hinterlegt sind.

4. Feldspritzensystem nach Anspruch 1, **dadurch gekennzeichnet, dass** die Fördereinrichtung (14) von zwei Wasserstrahlpumpen (12, 13) gebildet wird, dass sich die eine Wasserstrahlpumpe (12) in der vom Flüssigkeitstank (1) zum Zusatzbehälter (2) führenden Zulaufleitung (10) und die andere Wasserstrahlpumpe (13) in der vom Zusatzbehälter (1) zum Flüssigkeitstank (2) führenden Rücklaufleitung (11) befindet, dass die elektrischen Mittel als elektrisch schaltbare Ventile (18, 19) ausgebildet sind.

## Claims

1. Enclosed agricultural field sprayer system comprising a liquid tank and an auxiliary container, which are connected to one another via a pipe system and exhibit a delivery arrangement for transferring and/or circulating the liquid, the exchange of the liquid between the liquid tank and the auxiliary container being effected by means of assigned delivery arrangements, in conjunction with which means are provided for the switching on and off of the delivery arrangements, **characterized in that** the means for the switching on and off of the delivery arrangements (12, 13, 14, 31, 32, 33) for the purpose of transferring and/or circulating the liquid from the tank into the container and vice versa are configured as electrically switchable means (18, 19, 32, 33), **in that** an electrical and/or electronic sensor unit (24, 25, 27) for registering the liquid level in the liquid tank (1) and the auxiliary container (2) is provided in each case, **in that** the sensor units (24, 25, 27) transmit signals to a processing unit (22), **in that** the level data are computable from the signals and **in that** the electrically switchable means (18, 19, 32, 33) are capable of being actuated by the processing unit (21, 22, 23) on the basis of the computed data.

2. Field sprayer system according to Claim 1, **characterized in that** at least one manual and one automatic operating mode for controlling the electrical means (18, 19, 32, 33) for switching on and off the delivery arrangements (12, 13, 14, 31, 32, 33) are stored in the processing unit (21, 22, 23).

3. Field sprayer system according to one or more of the preceding Claims, **characterized in that** the switching cycles for the electrical valves (18,19) and/or means assigned to the delivery arrangements (12, 13, 14, 31, 32, 33) are stored for the automatic operating mode, and at least for the 'filling', 'transport' and 'spraying' modes of operation.

4. Field sprayer system according to Claim 1, **characterized in that** the delivery arrangement (14) is constituted by two water jet pumps (12, 13), **in that** one water jet pump (12) is present in the supply pipe (10) leading from the liquid tank (1) to the auxiliary container (2) and the other water jet pump (13) is present in the return pipe (11) leading from the auxiliary container (2) to the liquid tank (1), and **in that** the electrical means are configured as electrically switchable valves (18, 19).

## Revendications

1. Système de pulvérisation agricole en circuit fermé composé d'un réservoir à liquide et d'un réservoir auxiliaire reliés l'un à l'autre par un système de conduites ainsi qu'une installation de pompage pour transférer et/ou faire circuler le liquide,
l'échange de liquide entre le réservoir de liquide et le réservoir auxiliaire se faisant à l'aide d'installations de pompage associées,
des moyens étant prévus pour mettre en marche et arrêter les installations de pompage,
**caractérisé en ce que**
- les moyens pour mettre en marche et pour arrêter les installations de pompage (12, 13, 14, 31, 32, 33) servant à transférer et/ ou à faire circuler le liquide du réservoir vers le réservoir auxiliaire et inversement, sont des moyens de commutation électrique (18, 19, 32, 33),
- une unité de capteur électrique et/ou électronique (24, 25, 27) respective étant prévue pour déterminer le niveau de liquide dans le réservoir de liquide (1) et dans le réservoir auxiliaire (2),
- les unités de capteur (24, 25, 27) transmettant des signaux à une unité de calcul (22),
- et à partir des signaux on calcule les données de niveau de remplissage à partir desquelles, l'unité de calcul (21, 22, 23) actionne les moyens de commutation électrique (18, 19, 32, 33).

2. Système de pulvérisation agricole selon la revendication 1,
**caractérisé en ce que**
l'unité de calcul (21, 22, 23) contient au moins un mode de fonctionnement manuel et un mode de fonctionnement automatique pour commander des moyens électriques (18, 19, 32, 33) de mise en marche et d'arrêt des installations de pompage (12, 13, 14, 31, 32, 33).

3. Système de pulvérisation agricole selon l'une ou plusieurs des revendications précédentes,
**caractérisé en ce que**
pour le mode de fonctionnement automatique, on a enregistré au moins les modes de fonctionnement suivants : « remplissage », « transport », « pulvérisation » pour les cycles de commutation des électrovannes (18, 19) associées aux installations de pompage (12, 13, 14, 31, 32, 33).

4. Système de pulvérisation agricole selon la revendication 1,
**caractérisé en ce que**
l'installation de pompage (14) est constituée par deux pompes à jet à eau (12, 13) l'une des pompes à jet (12) équipant la conduite d'alimentation (10) reliant le réservoir de liquide (1) au réservoir auxiliaire (2) et l'autre pompe à jet (13) équipant la conduite de retour (11) reliant le réservoir auxiliaire (1) au réservoir de liquide (2) et les moyens électriques sont des électrovannes (18, 19).
